(19) Europäisches Patentamt
European Patent Office
Office européen des brevets

(11) Veröffentlichungsnummer : **0 029 162**
**B1**

(12) # EUROPÄISCHE PATENTSCHRIFT

(45) Veröffentlichungstag der Patentschrift : **13.10.82**

(51) Int. Cl.³ : **C 09 K 3/34**, C 08 F283/12

(21) Anmeldenummer : **80106770.3**

(22) Anmeldetag : **04.11.80**

(54) **Flüssigkristalline Phasen aufweisende Zusammensetzungen, Verfahren zu deren Herstellung und ihre Verwendung.**

(30) Priorität : **05.11.79 DE 2944591**

(43) Veröffentlichungstag der Anmeldung : **27.05.81 (Patentblatt 81/21)**

(45) Bekanntmachung des Hinweises auf die Patenterteilung : **13.10.82 Patentblatt 82/41**

(84) Benannte Vertragsstaaten : **BE CH DE FR GB IT LI NL**

(56) Entgegenhaltungen :
**CHEMICAL ABSTRACTS, Band 89, 1978, Seite 605, Zusammenfassung Nr. 189221z, Columbus, Ohio, US, F. VOLINO et al. : « Octaphenylcyclotetrasiloxane (OPCTS) : a new kind of mesophase ?**
**CHEMICAL ABSTRACTS, Band 92 Nr. 10, Mai 1980, Seite 1, Zusammenfassung Nr. 164399n, Columbus, Ohio, US, H. FINKELMANN et al. : « Investigations on liquid crystalline polysiloxanes. I. Synthesis and characterization on linear polymers »**

(73) Patentinhaber : **WACKER-CHEMIE GMBH**
**Prinzregentenstrasse 22**
**D-8000 München 22 (DE)**

(72) Erfinder : **Finkelmann, Heino, Dr., Dipl.-Chem.**
**Goslarsche Strasse 59**
**D-3392 Clausthal-Zellerfeld (DE)**
Erfinder : **Rehage, Günther, Prof. Dr.**
**Einersberger Blick 17**
**D-3392 Clausthal-Zellerfeld (DE)**
Erfinder : **Kollmann, Georg, Dr. Dipl.-Ing.**
**Wackerstrasse 5**
**D-8263 Burghausen (DE)**

**EP 0 029 162 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Flüssigkristalline Phasen aufweisende Zusammensetzungen, Verfahren zur deren Herstellung und ihre Verwendung

Flüssigkeiten, die unter bestimmten Bedingungen sonst nur bei kristallinen Festkörpern zu beobachtende Eigenschaften aufweisen, wie z.B. optische Anisotropie, sind bereits seit langem bekannt.

In jüngerer Zeit wurden solche Eigenschaften auch an makromolekularen Systemen beobachtet, beispielsweise an mit mesogenen Molekülen modifizierten Polyacryl- und Methacrylsäureestern. Nematische Phasen solcher polymerer Systeme liegen typischerweise bei Temperaturen über 100 °C.

Aufgabe der Erfindung war es nun, polymere Systeme zu finden, die gegenüber den vorbekannten folgende Vorteile aufweisen :

1. Die polymeren Stoffe sollten flüssigkristalline Phasen auch bei relativ niedrigen Temperaturen, insbesondere bei und unterhalb Raumtemperatur besitzen.
2. Es sollten flüssigkristalline Phasen aufweisende Systeme entwickelt werden, die derartige Eigenschaften auch innerhalb eines großen Druck- und Temperaturintervalls besitzen und gegenüber bekannten Systemen niedrigere Viskosität aufweisen.

Weiterhin war es Aufgabe der Erfindung, solche flüssigkristalline Phasen aufweisende Systeme aufzuzeigen, die es gestatten, ihre Eigenschaften auf die jeweils gewünschten Anwendungserfordernisse zuzuschneiden, beispielsweise in Bezug auf Viskosität, Art der flüssigkristallinen Phase und Lage und Breite des Temperaturbereichs, innerhalb derer die flüssigkristalline Phase besteht.

Gegenstand der Erfindung sind somit flüssigkristalline Phasen aufweisende Zusammensetzungen, die mindestens eine Komponente enthalten, bestehend aus einem Organo-Polysiloxanrückgrat, das chemisch gebundene, mesogene Moleküle als Seitenketten trägt.

Bevorzugt sind Zusammensetzungen, die nematische oder cholesterinische Eigenschaften besitzen. Die Erfindung umfaßt demnach insbesondere Polysiloxane mit nematischen oder cholesterinischen Eigenschaften, Gemische nematischer-, Gemische cholesterinischer-, Gemische nematischer und cholesterinischer Eigenschaften aufweisende Polysiloxane und solche Polysiloxane, die am gleichen Molekül sowohl nematogene wie cholesterogene bzw. chirale Moleküle als Seitenketten tragen.

Dabei besitzt eine Einzelkomponente oftmals smektische oder chirale Eigenschaften. Eine cholesterinische oder nematische Eigenschaften aufweisende Zusammensetzung, die eine derartige Komponente enthält, wird in der Weise formuliert, daß mindestens eine, an sich nematische Komponente, mit der smektischen oder chiralen vermischt wird. Der Anteil der smektischen oder chiralen Komponente übersteigt normalerweise nicht 50 %.

Eine flüssig-kristalline Eigenschaften aufweisende Einzelkomponente wird durch Pfropfen mesogener Moleküle auf ein Organo-Polysiloxan erhalten.

Die erfindungsgemäßen Zusammensetzungen lassen sich in weiten Viskositätsbereichen auf die jeweiligen Anwendungserfordernisse zuschneiden. Der Existenzbereich der flüssigkristallinen Phasen läßt sich durch spezifische Wahl der mesogenen Aufpfropfung sowohl in Bezug auf Lage und Breite des Temperaturbereichs, in denen die flüssigkristallinen Phasen existieren, anwendungsspezifisch einstellen, wie feinreguliert abstimmen. Mit der Variation der Besetzungsdichte der mesogenen Moleküle auf dem Organo-Poly-Siloxanrückgrat erschließt sich hierfür ein zusätzlicher Abstimmungsparameter.

Weitere Vorteile der erfindungsgemäßen Zusammensetzungen, soweit sie sich nicht ohnehin aus der Aufgabenstellung ergeben, sind ihre Temperaturbeständigkeit und ihre chemische Stabilität.

So sehr die Aufgabe der Erfindung einerseits im Bereich des Wünschenswerten liegt, so überraschend ist es andererseits, daß sich der Erfindungsgedanke auch technisch realisieren läßt. Es ist insbesondere überraschend, daß sich die erfindungsgemäßen makromolekularen Systeme so formulieren lassen, daß die flüssigkristallinen Phasen bereits bei und unterhalb Zimmertemperatur erhalten werden können.

Die Herstellung der erfindungsgemäßen Zusammensetzungen erfolgt durch Vermischen der Einzelkomponenten. Das Verfahren zur Herstellung der Einzelkomponenten ist dadurch gekennzeichnet, daß Poly-Organo-Wasserstoff-Siloxane in äquimolaren Mengen mit vinylsubstituierten mesogenen Molekülen, ggf. in Lösung, in Anwesenheit von, die Anlagerung von Si-gebundenem Wasserstoff an aliphatische Mehrfachbindungen fördernden Katalysatoren, umgesetzt werden.

Als organische Reste der Organo-Wasserstoff-Polysiloxane sind, der leichten chemischen Zugänglichkeit wegen, Methylgruppen bevorzugt, es kommen aber auch, insbesondere als Verschnittanteil Organo-Wasserstoff-Polysiloxane mit anderen Alkyl-, sowie aromatischen Substituenten zum Einsatz. Die erfindungsgemäß als Ausgangssubstanzen zu verwendenden Polysiloxane sind mit organischen Resten, vorzugsweise mit Methylgruppen endblockiert.

Der Anteil an Si-H-Bindungen im Ausgangsmaterial sollte aus praktischen Gründen nicht die Anzahl an Siliciumatomen überschreiten, da bei zu hohem Si-H-Gehalt oft Wasserstoffentwicklung bei der Pfropfreaktion beobachtet wird, die zu nicht reproduzierbaren Ergebnissen führen könnte. Im übrigen wird der sinnvolle Si-H-Anteil, mit der sich daraus ergebenden Besetzungsdichte an mesogenen Gruppen durch anwendungsspezifische Erfordernisse, wie auch durch solche Eigenschaften der mesogenen Moleküle, wie Platzbedarf oder Stärke der kooperativen Wechselwirkung zwischen Polymerrückgrat und mesogenen Molekülen, sowie zwischen benachbarten mesogenen Molekülen bestimmt.

Die Kettenlänge der erfindungsgemäß für die Pfropfreaktion einzusetzenden Organo-Wasserstoff-Polysiloxane kann in weiten Grenzen variieren. Sie ist im wesentlichen nach oben nur durch die Viskositätszunahme begrenzt. Da erfindungsgemäß auch Verschnitte verschiedener Organopolysiloxane eingesetzt werden können, erkennt der Fachmann die für diesen Parameter mögliche Variationsbreite. Mit dem beanspruchten Bereich von 2 bis 2 000 Siliciumatomen pro Molekül, entsprechend einer Viskosität von 0,5 bis 1 Mio. mPa.s bei 25 °C bewegt sich die Anmelderin im üblichen technischen Rahmen.

Als mesogene Moleküle kommen grundsätzlich alle, mesogene Eigenschaften aufweisende Verbindungen in Betracht, soweit sie in Bezug auf die Pfropfreaktion auf das Organopolysiloxanrückgrat die funktionelle Vinylgruppe besitzen.

Mesogene Eigenschaften aufweisende Funktionen sind bereits in großem Umfang in der Literatur beschrieben. Es sei in diesem Zusammenhang auf eine zusammenfassende Darstellung verweisen, von Dietrich Demus et al, « Flüssige Kristalle in Tabellen », VEB Deutscher Verlag für Grundstoffindustrie, Leipzig, 1974.

Hervorgehoben seien Derivate des Cyclohexans, wie Cyclohexyl-Carbonsäure-Phenylester, Cyclohexyl-Phenyl-Äther, Cyclohexyl-Benzole, Cyclohexyl-Carbonsäure-Cyclohexylester, Bi-Cyclohexyl-Derivate u.a. Gleichrangig zu nennen sind ferner:

Derivate des Stilbens, Derivate des Benzoesäurephenylesters, Benzylidenaniline, Derivate des Azobenzols, Derivate des Azoxybenzols, Alkyl- und Alkoxyderivate des Biphenyls, Steroide, wie Derivate des Cholesterins und des Cholestans.

Oftmals sind chirale Strukturen als mesogene Moleküle, die für sich, d.h. ohne auf das Polysiloxanrückgrat aufgepfropft zu sein, keine mesogenen Eigenschaften aufweisen, geeignet, zusammen mit nematogenen Komponenten cholesterinische Phasen aufweisende Zusammensetzungen zu erzeugen.

Zwischen der mesogenen Funktion und dem Organopolysiloxanrückgrat sollte eine flexible Verbindung bestehen, die mindestens 3 Methylengruppen umfaßt.

Oft ist es aus anwendungsspezifischen Gründen erwünscht, daß die mesogenen Funktionen polare Gruppen, wie beispielsweise die Nitrilgruppe enthalten, um einen hohen dielektrischen Anisotropieeffekt zu erhalten.

Die Aufpfropfreaktion kann, ohne daß dies zwingend erforderlich wäre, in Lösungsmitteln vorgenommen werden, wie beispielsweise Petroläther, Benzol, Toluol oder Tetrahydrofuran.

Die Reaktionstemperatur ist kein entscheidender Reaktionsparameter. Der bevorzugte Bereich beträgt 20 bis 120 °C.

Als die Aufpfropfreaktion fördernde Katalysatoren kommen feinverteiltes, metallisches, ggf. auf Träger wie etwa Aktivkohle aufgebrachtes Platin, Ruthenium, Rhodium oder Palladium in Betracht, sowie Verbindungen und Komplexe dieser Elemente, z.B. $PtCl_4$, $H_2PtCl_6$ $6H_2O$, $Na_2PtCl_4$ $4H_2O$, Pt-Olefin-, Pt-Alkohol-, Pt-Äther-Komplexe o.a.

Die erfindungsgemäßen flüssigkristalline Phasen aufweisenden Zusammensetzungen lassen sich zur Temperaturindikation einsetzen. Derartige Anwendungen ergeben sich beispielsweise auf dem Sektor der Medizin, der zerstörungsfreien Werkstoffprüfung (Wärmeflußverfahren) oder bei der Lösung von Prüfproblemen in der Mikroelektronik. Ein wichtiges Anwendungsfeld eröffnet sich ferner in der optischen Anzeige elektrischer und magnetischer Felder (Optoelektronik). Weitere Anwendungsmöglichkeiten erschließen sich auf dem Gebiet der elektrographischen Verfahren, der Lichtmodulation oder beispielsweise der Verwendung als Bestandteil von Polarisationsfolien.

Die Erfindung wird nun anhand von Beispielen näher erläutert:

## Beispiel 1

Pfropfpolymer von 4-Propen-2-oxy-Benzoesäure-4'-methoxy-Phenylester und Methyl-Wasserstoff-Polysiloxan.

4-Hydroxy-Benzoesäure wurde in Gegenwart von Natronlauge mit Allylbromid umgesetzt. Das Rohprodukt wurde aus Ethanol umkristallisiert.

Die freie Säure wurde mit einem Überschuß von Thionylchlorid am Rückfluß gekocht, anschließend nicht umgesetztes Thionylchlorid im Vakuum abgezogen und das verbleibende Säurechlorid in Tetrahydrofuran aufgenommen.

Einer Lösung von 4-Methoxy-Phenol in Tetrahydrofuran wurde unter Kühlen eine äquimolare Menge einer Lösung des Säurechlorids in Tetrahydrofuran zugetropft. Die Reaktionstemperatur betrug 5 °C. Nach beendeter Zugabe wurde noch eine Stunde am Rückfluß gekocht. Das Reaktionsprodukt wurde anschließend in Eiswasser eingebracht, neutralisiert und das als Niederschlag anfallende Rohprodukt abfiltriert.

Der erhaltene 4-Propen-2-oxy-4'-methoxy-Phenylester wurde aus Ethanol umkristallisiert.

Äquimolare Mengen eines Methyl-Wasserstoff-Polysiloxans der Formel

(Siehe die Formel, Seite 4)

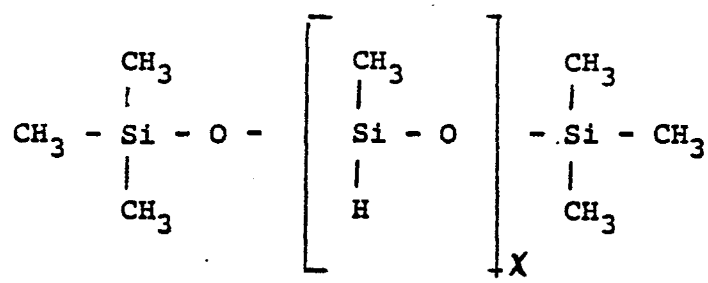

wobei X = 120

und des oben beschriebenen Esters wurden in Tetrahydrofuran gelöst. Anschließend wurde Hexa-Chloro-Platin-Säure in einer Menge von 100 ppm, bezogen auf die Gesamtmenge, zugefügt. Die Reaktionsmischung wurde über Nacht auf 50 °C gehalten.

Das erhaltene Organopolysiloxan wurde mit Methanol ausgefällt und schließlich im Vakuum getrocknet.

Das erhaltene Produkt wurde mit Hilfe eines Polarisationsmikroskops sowie durch Differentialscanningkalorimetrie (DSC) und Röntgenstrukturanalyse auf flüssigkristalline Eigenschaften untersucht.

Ergebnis :

| Glastemperatur (K) | Nematische Phase (K) | Isotrope Flüssigkeit (K) |
|---|---|---|
| 288 | 288-334 | ab 334 |

Vergleichsbeispiel 1

Momerer 4-Propen-2-oxy-Benzoesäure-4′-methoxy-Phenylester wurde wie in Beispiel 1 auf flüssigkristalline Eigenschaften untersucht.

Die Verbindung ging bei einer Temperatur von 362 K vom kristallinen Zustand, ohne daß eine Meso-Phase beobachtet wurde, in den isotropen Zustand über.

Beispiel 2

Pfropfpolymer von 4-Buten-3-oxy-Benzoesäure-4′-methoxy-Phenylester mit Methyl-Wasserstoff-Polysiloxan.

Es wurde analog Beispiel 1 verfahren.

Ergebnis :

| Glastemperatur (K) | Nematische Phase (K) | Isotrope Flüssigkeit (K) |
|---|---|---|
| 288 | 288-358 | ab 358 |

Beispiel 3

Pfropfpolymer von 4-Propen-2-oxy-Benzoesäure-4′-n-hexyl-oxy-Phenylester mit Methyl-Wasserstoff-Polysiloxan.

Die Herstellung des Pfropfpolymeren erfolgte analog Beispiel 1.

Ergebnis :

| Glastemperatur (K) | Smektische Phase (K) | Isotrope Flüssigkeit (K) |
|---|---|---|
| 288 | 288-385 | ab 385 |

Beispiel 4

Pfropfpolymer von 4-Propen-2-oxy-Benzoesäure-4'-nitrilo-Phenylester.
Die Herstellung des Pfropfpolymeren erfolgte analog Beispiel 1.

Ergebnis :

| Glastemperatur (K) | Smektische Phase (K) | Isotrope Flüssigkeit (K) |
|---|---|---|
| 293 | 293-334 | 334 |

Vergleichsbeispiel 2

Monomerer 4-Propen-2-oxy-Benzoesäure-4'-nitrilo-Phenylester (aus Beispiel 4) wurde auf flüssigkristalline Eigenschaften untersucht.

Ergebnis :

Bei 376 K ging die Verbindung, ohne eine Meso-Phase aufzuweisen, vom kristallinen in den isotropen flüssigen Zustand über.

Beispiel 5

Pfropfpolymer von Buten-3-säure-Cholesterinester mit Methyl-Wasserstoff-Polysiloxan.
Der obengenannte Cholesterinester wurde aus Buten-3-säure-chlorid durch Verestern mit Cholesterin dargestellt.
Die Aufpfropfung wurde analog Beispiel 1 durchgeführt.

Ergebnis :

| Glastemperatur (K) | Smektische Phase (K) | Isotrope Flüssigkeit (K) |
|---|---|---|
| 318 | 318-388 | 388 |

Beispiel 6

Intramolekulares Pfropfpolymer von Buten-3-säure-Cholesterinester (Komponente A) und 4-Buten-3-oxy-Benzoesäure-4'-methoxy-Phenylester (Komponente B) mit Methyl-Wasserstoff-Polysiloxan.
Die Darstellung der mesogenen Verbindungen ist in den Beispielen 2 und 5 beschrieben.
Die Herstellung des intramolekularen Pfropfpolymeren erfolgte analog Beispiel 1, mit der Abwandlung, daß eine Mischung der Komponenten A und B im Verhältnis von

1) 5 Mol% A und 95 Mol% B
2) 15 Mol% A und 85 Mol% B

eingesetzt wurde, so daß die Aufpfropfreaktion im oben angegebenem Verhältnis intramolekular (d.h. beide Komponenten sind am gleichen Makromolekül chemisch gebunden) erfolgte.

Ergebnisse :

| Anteil der Komponente A | Glastemperatur | Cholesterinische Phase | Isotrope Flüssigkeit |
|---|---|---|---|
| Mol-% | K | K | K |
| 5 | 288 | 288-354 | ab 354 |
| 15 | 294 | 294-353 | ab 353 |

Die Reflexionsflanke des, mit einem 5 Mol%-igen Anteil an chiraler Komponente gepfropften Organo-Polysiloxans, liegt gerade noch im sichtbaren Bereich, es erscheint rot, während bei dem, mit einem 15 Mol%-igen Anteil an chiraler Komponente modifizierten Organo-Polysiloxan, die Reflexionswellenlänge, in den grünen Bereich verschoben ist.

**Ansprüche**

1. Flüssigkristalline Phasen aufweisende Zusammensetzungen, die mindestens eine Komponente enthalten, bestehend aus einem Organo-Polysiloxanrückgrat, das chemisch gebundene, mesogene Moleküle als Seitenketten trägt.

2. Flüssigkristalline Phasen aufweisende Zusammensetzungen nach Anspruch 1, die Organo-Polysiloxane mit 2 bis 2 000 Si-Atomen enthalten.

3. Flüssigkristalline Phasen aufweisende Zusammensetzungen nach Anspruch 1, die nematische oder cholesterinische Phasen aufweisen.

4. Flüssigkristalline Phasen aufweisende Zusammensetzungen nach Anspruch 1, die mindestens eine Komponente enthalten, bestehend aus einem Organo-Polysiloxanrückgrat, das intramolekular chemisch gebundene, nematogene und cholesterogene bzw. chirale Moleküle als Seitenketten trägt.

5. Verfahren zur Herstellung von flüssigkristalline Phasen aufweisenden Stoffen, dadurch gekennzeichnet, daß Poly-Organo-Wasserstoff-Siloxane in äquimolaren Mengen mit vinyl-substituierten mesogen Molekülen, ggf. in Lösung, in Anwesenheit von, die Anlagerung von Si-gebundenem Wasserstoff an aliphatische Mehrfachbindungen fördernden Katalysatoren, umgesetzt werden.

6. Verwendung von flüssigkristalline Phasen aufweisenden Zusammensetzungen nach Anspruch 1 auf den Gebieten der Opto-Elektronik, der Informationsspeicherung, der Prüftechnik, der Temperaturindikation oder in elektrographischen Verfahren.

**Claims**

1. Compositions having liquid crystal phases and containing at least one component consisting of an organopolysiloxane backbone which carries chemically bonded mesomorphic molecules as side chains.

2. Compositions having liquid crystal phases according to claim 1, which contain organopolysiloxanes having from 2 to 2 000 Si atoms.

3. Compositions having liquid crystal phases according to claim 1, which have nematic or cholesterolic phases.

4. Compositions having liquid crystal phases according to claim 1, which contain at least one component consisting of an organopolysiloxane backbone which carries intramolecularly chemically bonded nematomorphic and cholesterolmorphic or chiral molecules as side chains.

5. Process for the preparation of substances having liquid crystal phases, characterised in that polyorganohydrogensiloxanes are reacted in equimolar amounts with vinyl-sybstituted mesomorphic molecules, if desired in solution, in the presence of catalysts that promote the addition of Si-bonded hydrogen to aliphatic multiple bonds.

6. Use of compositions having liquid crystal phases according to claim 1, in the fields of optoelectronics, information storage, testing techniques, temperature indication, and electrographic processes.

**Revendications**

1. Compositions présentant des phases cristallines liquides, compositions qui renferment au moins une composante constituée d'un squelette poly-organosiloxanique portant, comme chaînes latérales, des molécules mésogènes chimiquement liées.

2. Compositions présentant des phases cristallines liquides selon la revendication 1, qui contiennent des poly-organosiloxanes ayant de 2 à 2 000 atomes de silicium.

3. Compositions présentant des phases cristallines liquides selon la revendication 1, qui présentent des phases nématiques ou cholestériques.

4. Compositions présentant des phases cristallines liquides selon la revendication 1, qui contiennent au moins une composante constituée d'un squelette poly-organosiloxanique portant, comme chaînes latérales, des molécules nématogènes et cholestérogènes ou chirales liées chimiquement de façon intramoléculaire.

5. Procédé de préparation de substances présentant des phases cristallines liquides, procédé caractérisé en ce qu'on fait réagir des poly-organo-hydrogéno-siloxanes, en des quantités équimolaires, avec des molécules mésogènes vinyliques, éventuellement en solution, en présence de catalyseurs accélérant la fixation d'hydrogène lié à Si sur des liaisons multiples aliphatiques.

6. Application de compositions présentant des phases cristallines liquides selon la revendication 1, dans les domaines de l'opto-électronique, de la mise en mémoire d'informations, de la technique des contrôles, de l'indication des températures ou dans des procédés électrographiques.